# FASCICULE DE BREVET EUROPEEN

(11) **EP 3 169 984 B1**
(45) Date de publication et mention de la délivrance du brevet: **28.10.2020**
(21) Numéro de dépôt: 15753122.9
(22) Date de dépôt: 17.07.2015
(51) Int. Cl.: G01L 1/22, B29C 65/00

(54) **PROCÉDÉ DE RÉALISATION D'UN CAPTEUR D'EFFORTS ET INSTALLATION DE MISE EN OEUVRE**
VERFAHREN ZUR HERSTELLUNG EINES KRAFTSENSORS UND ANLAGE ZUR IMPLEMENTIERUNG DAVON
METHOD FOR MANUFACTURING A FORCE SENSOR AND FACILITY FOR IMPLEMENTING SAME

(30) Priorité: 17.07.2014 FR 1456896
(43) Date de publication de la demande: 24.05.2017
(73) Titulaire: Centre Technique Des Industries Mecaniques, 60300 Senlis (FR)
(72) Inventeur: ANTHOINE-MILHOMME, Didier, F-73410 Albens (FR)
(74) Mandataire: Fédit-Loriot
(86) Numéro de dépôt international: PCT/FR2015/051974
(87) Numéro de publication internationale: WO 2016/009161

(56) Documents cités:
- EP-A2- 0 726 541
- EP-A2- 2 000 765
- FR-A1- 2 460 724
- FR-A1- 2 686 972
- JP-A- 2009 300 096
- US-A- 5 049 232
- US-A- 6 030 480
- US-A1- 2005 160 837
- US-A1- 2011 088 844

## Description

La présente invention se rapporte à un procédé de réalisation d'un capteur d'efforts et à une installation de mise en œuvre dudit procédé.

Un domaine d'application envisagé est notamment, mais non exclusivement, celui des capteurs d'efforts et de couples pour des applications réalisables en grande série.

Des procédés connus permettent de réaliser des capteurs d'efforts. On utilise pour ce faire un appareil de mesure de déformation et un corps d'épreuve sur lequel on vient sceller l'appareil de mesure. Cet appareil de mesure comporte une jauge de déformation laquelle est par exemple constituée d'une plaque de circuit imprimé sur laquelle est précisément imprimé un circuit, fait d'une seule piste étroite agencée en portions de piste contiguës. Le principe de base qui régit le fonctionnement de la jauge de déformation est le changement de conductibilité d'un matériau en fonction de la contrainte mécanique qu'il subit. En l'espèce, la déformation du circuit imprimé conduit à une variation de la conductibilité du matériau de la piste. Partant, au moyen d'un pont de Wheatstone, pour amplifier le signal, grâce à la jauge de déformation, on mesure un signal électrique variable en fonction de la contrainte subie par le circuit imprimé.

Ainsi, la plaque de circuit imprimé est scellée au moyen d'un adhésif à la surface du corps d'épreuve. Ce dernier subira les déformations, et partant, il sera choisi en fonction de l'application considérée afin qu'il se déforme exclusivement dans sa gamme de déformation élastique. L'adhésif est déposé en couche sur une surface de réception du corps d'épreuve, puis la plaque de circuit imprimé est appliquée sur la couche d'adhésif. On utilise un adhésif réactif à la chaleur, par exemple une résine de type époxyde, qui a l'avantage de durcir rapidement. L'adhésif ainsi durci constitue une liaison rigide de la surface de la plaque de circuit imprimé avec la surface de réception du corps d'épreuve.

On pourra se référer aux documents FR2 460 724 A1, JP 2009 300 096A, US 2005/160 837 A1, US 5 049 232 A ou encore FR 2 686 972 A1, lesquels décrivent un tel mode de mise en œuvre.

On installe ensuite un dispositif d'enregistrement des signaux fournis par le circuit imprimé et un dispositif de traitement de ces signaux pour en déduire une contrainte mesurée.

La valeur du signal mesuré en fonction d'une contrainte donnée sur le corps d'épreuve, varie sensiblement d'un capteur d'efforts à l'autre, ce qui, dans la plupart des applications domestiques ne soulève aucune difficulté.

En revanche, dans les applications où une grande précision est requise, il est nécessaire d'obtenir une grande reproductibilité des signaux mesurés d'un capteur d'efforts à l'autre.

Aussi, un problème qui se pose et que vise à résoudre la présente invention est de fournir un procédé permettant de réaliser des capteurs d'efforts en grande série aptes à fournir une même valeur mesurée pour une contrainte donnée.

Dans ce but, et selon un premier objet, la présente invention propose un procédé de réalisation d'un capteur d'efforts du type comprenant les étapes suivantes, a) on fournit un appareil de mesure de déformation et un corps d'épreuve présentant une surface de réception plane, puis, b) on fournit un adhésif visqueux réactif ; ensuite, c) on applique ledit adhésif visqueux réactif sur ladite surface de réception dudit corps d'épreuve, et d) on porte ledit appareil de mesure de déformation sur ledit adhésif visqueux appliqué de façon à emprisonner une couche dudit adhésif visqueux réactif entre ledit appareil de mesure de déformation et ladite surface de réception dudit corps d'épreuve ; et enfin, e) on provoque la réaction dudit adhésif visqueux réactif de ladite couche pour sceller ledit appareil de mesure de déformation sur ladite surface de réception dudit corps d'épreuve. En outre, entre l'étape d) et l'étape e), on applique une pression sur ledit appareil de mesure de déformation pour le porter à une distance donnée de ladite surface de réception, tandis que ladite couche d'adhésif visqueux réactif atteint une épaisseur déterminée. Afin de pouvoir appliquer la pression sur ledit appareil de mesure de déformation pour le porter à une distance donnée de ladite surface de réception, on fournit en outre un dispositif de calibrage.

Ainsi, une caractéristique de l'invention réside dans la mise en œuvre d'une étape de calibrage permettant d'obtenir pour chaque capteur d'efforts, une même épaisseur d'adhésif entre l'appareil de mesure de déformation et le corps d'épreuve. En effet, il est apparu que cette couche de scellement ne présentait pas nécessairement la même épaisseur d'un capteur d'efforts à l'autre, et que les dérives du signal mesuré en fonction de la contrainte subie par le corps d'épreuve, étaient en partie dues à la variation de cette épaisseur. De la sorte, en contrôlant la pression appliquée sur l'appareil de mesure de déformation après l'application de l'adhésif visqueux, et ce, jusqu'à une distance donnée de la surface de réception du corps d'épreuve, on obtient une même épaisseur d'adhésif solidifié entre l'appareil de mesure de déformation et le corps d'épreuve. Partant, pour une contrainte donnée appliquée au capteur d'efforts ainsi réalisés, on obtient une même valeur de signal. En conséquence, on peut alors réaliser en grande série des capteurs d'efforts d'une même précision.

En outre, on applique ladite pression sur ledit appareil de mesure de déformation, jusqu'à ce que ledit appareil de mesure de déformation soit porté à ladite distance donnée de ladite surface de réception. Aussi, dès que ledit appareil de mesure de déformation atteint ladite distance donnée, la pression exercée sur ledit appareil de mesure de déformation devient nulle.

De plus, ledit dispositif de calibrage vient d'une part s'appliquer sur ledit corps d'épreuve de chaque côté dudit appareil de mesure de déformation, et il vient d'autre part, en appui contre ledit appareil de mesure de déformation. Ainsi, en venant en appui contre l'appareil de mesure de déformation dans une position située en retrait par rapport à celle de l'appui sur le corps d'épreuve, on porte l'appareil de mesure de déformation à distance de la surface de réception.

Selon l'invention, on fournit un appareil de mesure de déformation comprenant au moins une jauge de déformation. L'appareil de mesure de déformation est par exemple constitué d'une plaque de circuit imprimé dont seule une portion est imprimée pour former la jauge de déformation. On prévoit également la réalisation d'une plaque de circuit imprimé présentant plusieurs portions espacées les unes des autres et dédiées respectivement à la formation de plusieurs jauges de contrainte.

En outre, et selon un mode de réalisation préféré, on fournit un appareil de mesure de déformation comprenant au moins un dispositif de traitement des signaux fournis par ladite jauge de déformation. Ainsi, d'autre portion du circuit imprimé sont réservées à la mise en œuvre de dispositifs de traitement des signaux, notamment d'amplification et de numérisation.

De plus, et selon une première variante de réalisation, à l'étape b) on fournit un adhésif visqueux réactif apte à réagir sous l'effet de la température. Par exemple, l'adhésif visqueux réagit, ou plus précisément, polymérise, à une température supérieure à 60 °C. Comme on l'expliquera ci-après, il est nécessaire que la couche d'adhésif visqueux durcisse le plus rapidement possible après que l'appareil de mesure de déformation soit appliqué, de manière à ce que l'épaisseur de cette couche ne varie plus.

Selon une seconde variante de réalisation, à l'étape b) on fournit un adhésif visqueux réactif apte à réagir sous l'effet du rayonnement ultraviolet. Ce type d'adhésif permet, dans certaines conditions, d'obtenir une couche d'adhésif solide plus rapidement.

Par exemple, à l'étape b) on fournit un adhésif visqueux réactif apte à se solidifier, de préférence, à l'intérieur d'un intervalle de temps inférieur à 10 minutes après que ladite réaction a été provoquée. Par exemple, l'adhésif se solidifie 5 minutes après l'avoir porté en température ; et il atteint une valeur voisine de 80 °C après cette durée.

En outre, à l'étape b) on fournit un adhésif visqueux réactif présentant, avantageusement, une viscosité comprise entre 50 Pa.s et 250 Pa.s avant que ladite réaction ne soit provoquée. En effet, il est nécessaire que l'adhésif soit suffisamment visqueux pour que l'épaisseur de la couche d'adhésif ne diminue pas entre l'instant où on applique une pression contrôlée sur l'appareil de mesure de déformation et l'instant où elle se solidifie.

De préférence, à l'étape e), on porte ledit corps d'épreuve et ledit appareil de mesure de déformation à l'intérieur d'une enceinte de chauffage pour provoquer la réaction dudit adhésif visqueux réactif. Par exemple, l'enceinte de chauffage permet de porter l'adhésif d'une température ambiante de 20°C à une température de 150 °C en 10 minutes, de manière à pouvoir assurer une parfaite polymérisation de celui-ci.

Selon un autre objet, la présente invention propose également une installation pour la réalisation d'un capteur d'efforts du type décrit ci-dessus, et comprenant : une plateforme de réception pour recevoir un corps d'épreuve présentant une surface de réception plane ; un dispositif d'application pour appliquer un adhésif visqueux réactif sur ladite surface de réception dudit corps d'épreuve ; un organe mécanique pour porter un appareil de mesure de déformation sur ladite couche d'adhésif visqueux de façon à emprisonner une couche dudit adhésif visqueux réactif entre ledit appareil de mesure de déformation et ladite surface de réception dudit corps d'épreuve ; et, un dispositif de traitement pour pouvoir provoquer la réaction dudit adhésif visqueux réactif de ladite couche pour sceller ledit appareil de mesure de déformation sur ladite surface de réception dudit corps d'épreuve. L'installation comprend en outre un dispositif de calibrage pour pouvoir appliquer une pression sur ledit appareil de mesure de déformation pour la porter à une distance donnée de ladite surface de réception, tandis que ladite couche d'adhésif visqueux réactif atteint une épaisseur déterminée.

Ainsi, le dispositif de calibrage vient d'abord prendre appui sur l'appareil de mesure de déformation pour l'entraîner en translation vers la surface de réception du corps d'épreuve et ensuite, il vient en butée contre la surface de réception dès que l'appareil de mesure de déformation est à une distance prédéterminée de la surface de réception.

Selon l'invention, ledit dispositif de calibrage comprend, d'une part, au moins deux pieds écartés l'une de l'autre aptes à venir s'appliquer sur ledit corps d'épreuve de chaque côté dudit appareil de mesure de déformation, et d'autre part, une traverse reliant lesdits deux pieds et présentant une cale d'appui située entre lesdits deux pieds et apte à venir en appui contre ledit appareil de mesure de déformation. Les deux pieds définissent un premier plan d'appui sur la surface de réception du corps d'épreuve, tandis que la cale d'appui définit un second plan d'appui parallèle au premier et situé en retrait à une distance équivalente à l'épaisseur de l'appareil de mesure de déformation additionnée de l'épaisseur de la couche d'adhésif souhaitée.

Selon ce dernier mode de mise en œuvre, et conformément à une variante de réalisation, lesdits au moins deux pieds sont montés réglables par rapport à ladite traverse pour pouvoir prérégler ladite distance donnée. Ainsi qu'on l'expliquera plus en détail dans la suite de la description, ces pieds réglables permettent de calibrer le dispositif de calibrage en fonction de l'épaisseur de l'appareil de mesure de déformation et de l'épaisseur de la couche d'adhésif visqueux souhaitée.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue schématique en perspective montrant une première étape du procédé de réalisation d'un capteur d'efforts selon l'invention ;
- les Figures 2A et 2B sont des vues schématiques d'un mode de mise en œuvre d'une deuxième étape du procédé selon l'invention ;
- la Figure 3 est une vue schématique en perspective montrant le résultat de la deuxième étape ;
- la Figure 4 est une vue schématique en élévation de face d'un dispositif montrant la mise en œuvre d'une troisième étape du procédé selon l'invention ;
- la Figure 5 est une vue schématique en perspective montrant le résultat de la troisième étape ;
- la Figure 6 est un graphe représentant un cycle de polymérisation d'une résine thermodurcissable mise en œuvre selon l'invention ;
- la Figure 7 est un graphe illustrant la viscosité en fonction de la température d'une résine thermodurcissable mise en œuvre selon l'invention ;
- la figure 8 est une vue schématique en élévation de face d'un autre dispositif montrant le procédé selon l'invention, conformément à un autre mode de mise en œuvre dans une phase d'exécution ; et,
- la figure 9 est une vue schématique dudit autre dispositif montrant le procédé conformément audit autre mode de mise en œuvre dans une autre phase d'exécution.

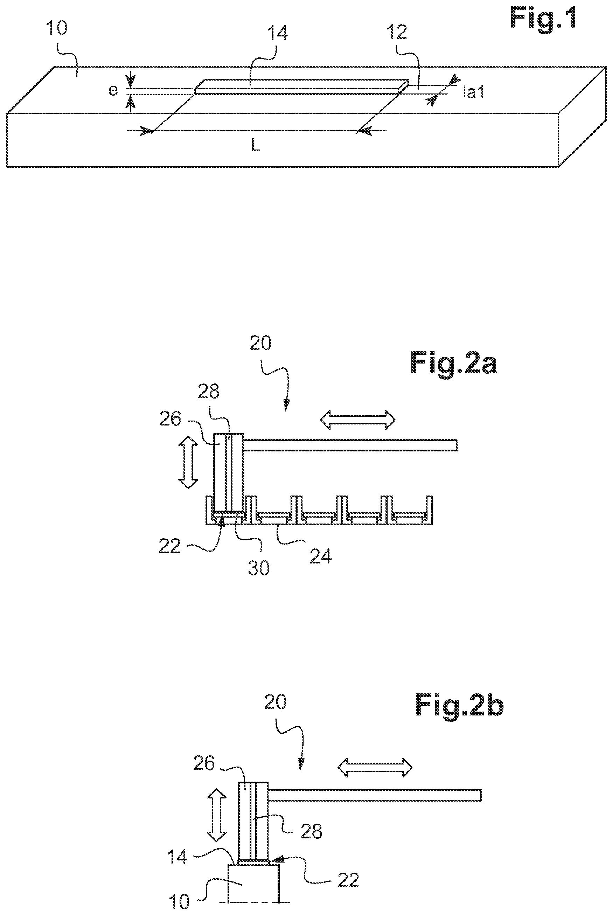

La Figure 1 illustre un corps d'épreuve 10 présentant une surface de réception plane 12, sur laquelle a été appliqué longitudinalement, un ruban d'un adhésif visqueux réactif 14. L'adhésif visqueux réactif est une masse visqueuse homogène et elle est ici formée en ruban.

Le corps d'épreuve 10 présente ici une forme de poutre dont la longueur est par exemple de l'ordre du centimètre. Il est par exemple réalisé en métal. Certains aciers alliés peuvent être utilisés ou encore l'aluminium. Ils sont toutefois sensibles à la corrosion, et doivent être protégés. Les aciers inoxydables ne présentent pas de problème en termes de corrosion, et peuvent être utilisés. D'autres matériaux métalliques peuvent être mis en œuvre. Quels qu'ils soient, il est nécessaire que le matériau présente un comportement élastique dans sa gamme de déformation, de manière à pouvoir revenir à son état initial en l'absence de contraintes.

S'agissant de l'adhésif visqueux réactif du ruban 14, il est appliqué en ruban par exemple grâce à une méthode sérigraphique ou bien au moyen d'une seringue pilotée par une valve et un doseur. La première est plus adaptée aux adhésifs à viscosité importante, par exemple pour les jauges de déformation en couche épaisse, tandis que la seringue est plus indiquée pour les adhésifs à viscosité plus faible, lesquels sont mis en œuvre pour les jauges de déformation dites à trame pelliculaire. Quelle que soit la méthode, elles sont susceptibles d'être mécanisées et automatisées au moyen d'un organe de pilotage.

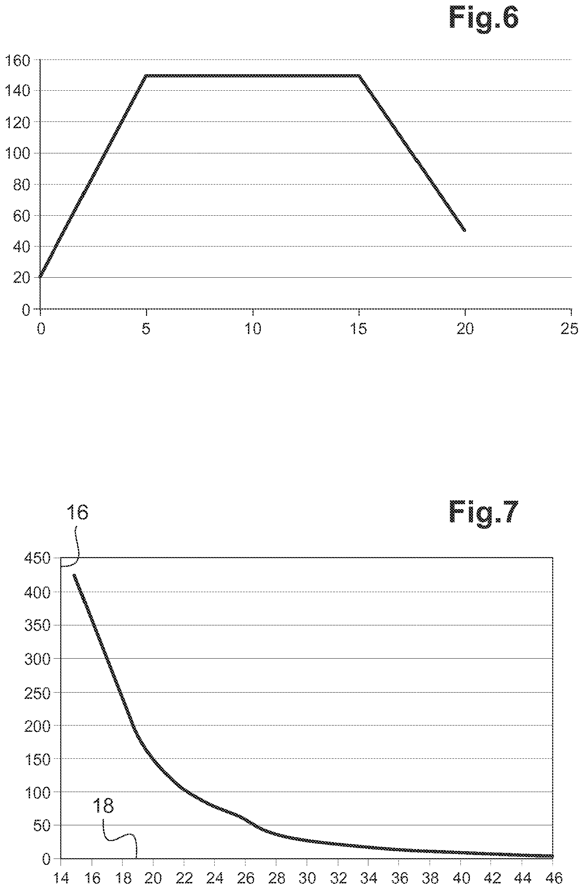

Quant à la nature de l'adhésif visqueux réactif, on choisira un matériau polymère apte à se polymériser et à durcir sous l'action de la chaleur. On choisira par exemple une résine époxyde, apte à réagir ainsi grâce à un durcisseur à base d'amine par exemple. On a représenté sur la Figure 7 la viscosité de cette résine, reportée sur l'échelle des ordonnées 16, en fonction de la température reportée sur l'échelle des abscisses 18. On considère que la résine n'a pas réagi avant et durant la mesure.

Ainsi, à température ambiante, soit environ 18 °C, la viscosité de la résine époxyde est de l'ordre de 250 Pa.s, ce qui permet de pouvoir former le ruban 14 avec une première épaisseur e suffisante pour la mise en œuvre du procédé.

Ainsi qu'on l'expliquera plus en détail ci-après, l'adhésif polymérise et durcit rapidement dès que la température est voisine de 80 °C.

L'installation de réalisation de capteur d'efforts conforme à l'invention et apte à mettre en œuvre le procédé selon l'invention, comprend un automate 20 tel que représenté sur les Figures 2A et 2B, destiné à saisir un appareil de mesure de déformation 22, stocké dans des alvéoles 24 appropriées et à l'entraîner en mouvement pour le déposer sur le corps d'épreuve 10 que l'on retrouve sur la Figure 2A.

Les appareils de mesure 22 sont ici constitués d'une plaque de circuit intégré incluant une jauge de déformation sérigraphiée et un composant électronique permettant de traiter les signaux fournis par la jauge.

L'automate 20 comporte un bras de saisie 26 traversé par une buse d'aspiration 28 laquelle débouche à l'extrémité de saisie 30 du bras de préhension 26. L'appareil de mesure 22 est suffisamment léger pour qu'une simple dépression dans la buse d'aspiration 28 permette, de venir le happer au niveau de l'extrémité de saisie 30 et de pouvoir la transporter ensuite par l'intermédiaire du bras de saisie 26. Celui-ci est commandé, de manière automatique, pour venir porter l'appareil de mesure 22 au droit de la surface de réception 12 et du ruban d'adhésif visqueux réactif 14. Ensuite, la buse d'aspiration 28 est portée à la pression atmosphérique, et l'appareil de mesure 22 se détache de l'extrémité de saisie 30 et vient s'appliquer sur l'adhésif visqueux réactif 14.

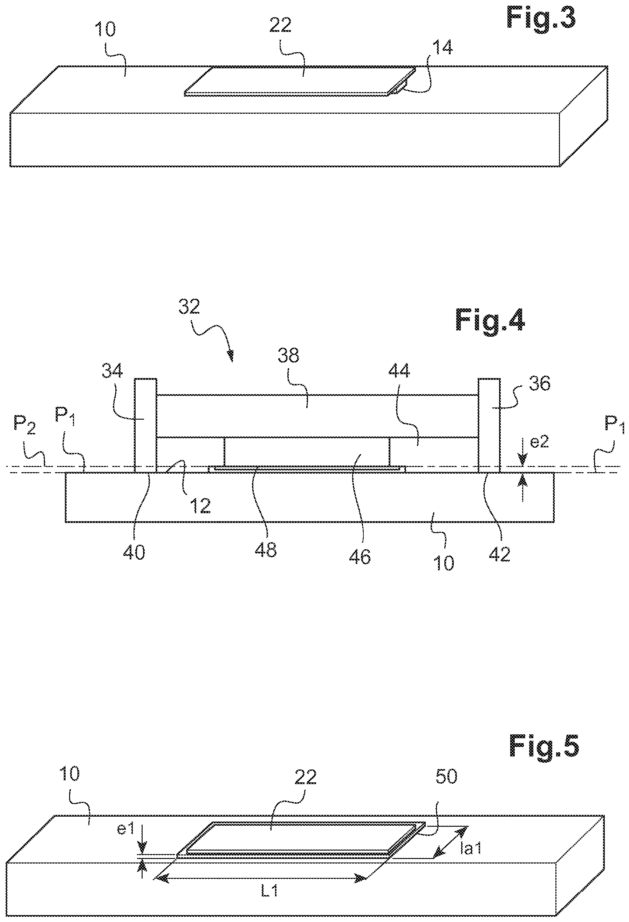

On retrouve sur la Figure 3 le corps d'épreuve 10 et l'appareil de mesure 22 déposé sur l'adhésif visqueux réactif sous forme de ruban 14. L'appareil de mesure 22 est suffisamment léger au regard de la viscosité de l'adhésif visqueux réactif pour que le ruban qu'il forme 14 ne s'aplatissent pas encore.

Ensuite, on vient appliquer sur le corps d'épreuve 10 et sur l'appareil de mesure 22 un dispositif de calibrage 32 représenté sur la Figure 4. Ce dernier présente deux pieds opposés 34, 36 et une traverse de structures 38 reliant ensemble de manière rigide les 2 pieds 34, 36. Les deux pieds 34, 36 présentent chacun une surface d'appui 40, 42, venant précisément en appui sur la surface de réception 12 de part et d'autre de l'appareil de mesure 22. Les deux surfaces d'appui 40, 42 sont coplanaires et elles définissent un premier plan d'appui P1 sur la surface de réception 12 du corps d'épreuve 10. Le premier plan d'appui P1 est, sur la Figure, confondu avec la surface de réception 12 du corps d'épreuve 10. Le dispositif de calibrage 32 définit un espace libre 44 entre la traverse 38 et le premier plan d'appui défini par les deux surfaces d'appui 40, 42. Le dispositif de calibrage 32 est équipé d'une cale d'appui 46 solidaire de la traverse 38 à équidistance des deux pieds 34, 36 et étendue en saillie dans l'espace libre 44. La cale d'appui 46 présente une face d'appui 48 définissant elle-même un second plan d'appui P2, parallèle au premier plan d'appui P1, et écarté de celui-ci, vers la traverse 38, d'une distance prédéfinie e2 correspondant à l'épaisseur de l'appareil de mesure 22 additionnée de l'épaisseur de la couche d'adhésif visqueux réactif souhaitée e1. Par exemple, l'épaisseur de l'appareil de mesure 22, constitué de la plaque de circuit et de la jauge de déformation qu'elle inclut est égale à 2 mm, tandis que l'on souhaite une épaisseur de la couche d'adhésif visqueux réactif e1 de 1 mm. Aussi, la face d'appui 48 s'étendra en retrait par rapport au premier plan d'appui P1, à une distance e2 de 3 mm.

Lorsque le dispositif de calibrage 32 est appliqué, simultanément, la cale d'appui 46 contre l'appareil de mesure 22, et les deux pieds 34, 36 contre le corps d'épreuve 10, les deux surfaces d'appui 40, 42 en appui sur la surface de réception 12, le surplus d'adhésif visqueux réactif est alors chassé vers l'extérieur de l'espace qui s'étend entre l'appareil de mesure 22 et la surface de réception 12, comme l'illustre la Figure 5. Et ainsi, une quantité calibrée d'adhésif est retenu prisonnière entre les deux. Elle forme une couche d'adhésif 50 dont l'épaisseur est déterminée.

Dès après cette étape d'ajustement de l'appareil de mesure 22 sur le corps d'épreuve 10, l'ensemble est placé dans une enceinte de chauffage non représentée. L'enceinte de chauffage est un four tunnel, permettant d'appliquer un profil thermique prédéterminé audit ensemble. On se reportera à la Figure 6 illustrant un exemple de profil de température subi par l'adhésif visqueux réactif. Les températures sont portées sur l'échelle d'ordonnées, de 0 à 160°C, tandis que le temps en minutes est porté en abscisses. Ainsi, au bout de 2,5 minutes, l'adhésif visqueux est à une température d'environ 80 °C, ce qui permet de le solidifier. De la sorte, l'épaisseur de la couche d'adhésif 50 est figée. Ensuite, la polymérisation se poursuit et l'adhésif atteint en 5 minutes la température de 150 °C. Il est maintenu à cette température pendant une période supplémentaire de 10 minutes pour ensuite être ramené à la température ambiante en 5 minutes. L'adhésif est alors parfaitement polymérisé, et par conséquent totalement solide. L'épaisseur de la couche d'adhésif 50 qui a été figée très tôt, n'a nullement évolué durant le cycle de polymérisation et est identique à la valeur prédéterminée e1 grâce au dispositif de calibrage 32.

Partant, le corps d'épreuve 10 sur lequel est scellé l'appareil de mesure 22 par l'intermédiaire de la couche d'adhésif 50 solide, est récupérée à la sortir du four tunnel pour pouvoir ensuite, réaliser un capteur d'efforts.

Un avantage du procédé selon l'invention, est de pouvoir automatiser les différentes étapes décrites ci-dessus et surtout, de pouvoir calibrer pour chaque appareil de mesure 22 et pour chaque corps d'épreuve 10 associé, l'épaisseur de la couche d'adhésif 50 entre les deux. Ceci est rendu possible grâce au dispositif de calibrage 32. Un tel procédé est applicable à de grandes séries de production. Et on peut de la sorte obtenir des séries de capteurs d'efforts présentant une réponse identique lorsqu'ils subissent une même contrainte

Bien évidemment, un tel procédé est applicable aux jauges de déformation en couche épaisse tout comme aux jauges de déformation à trame pelliculaire.

En outre, on prévoit, dans certaines circonstances, notamment lorsque l'appareil de mesure est sensible à la chaleur, un adhésif visqueux réactif susceptible de réagir sous l'effet du rayonnement ultraviolet. En pareille circonstance, et selon un mode de mise en œuvre particulièrement avantageux, on prévoit la mise en œuvre d'une cale d'appui transparente au rayonnement ultraviolet et une source de rayonnement ultraviolet venant la surmonter. De la sorte, on vient irradier l'adhésif à travers la cale d'appui transparente durant l'application de l'appareil de mesure sur le corps d'épreuve.

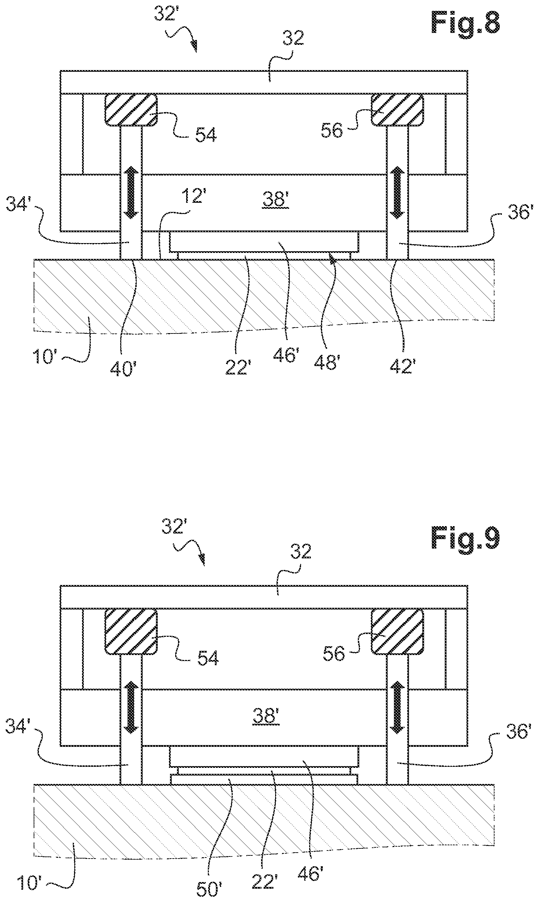

On se reportera à présent sur les Figures 8 et 9, pour décrire un dispositif de calibrage 32' selon une autre variante d'exécution. Les éléments analogues à la précédente variante porteront la même référence affectée d'un signe prime : «'». Les éléments additionnels porteront une référence incrémentant la suite des références déjà prises.

Ainsi, on retrouve sur les figures 8 et 9, le corps d'épreuve 10' et l'appareil de mesure 22' qui le surmonte. Le dispositif de calibrage 32' est appliqué sur l'appareil de mesure 22' et sur le corps d'épreuve 10'.

Le dispositif de calibrage 32' présente deux pieds parallèles opposés 34', 36' et une traverse de structures 38' à travers laquelle les 2 pieds 34', 36' sont montés mobiles en translation. La traverse de structures 38' est surmontée elle-même d'un portique 52, et le dispositif de calibrage 32' comporte deux actionneurs commandables 54, 56 installés respectivement entre les deux pieds 34', 36' et le portique 52. Les deux actionneurs commandables 54, 56, permettent également de mesurer respectivement l'amplitude de mouvement des deux pieds 34', 36'.

Les deux pieds 34', 36' présentent chacun une surface d'appui 40', 42', venant précisément en appui sur la surface de réception 12' de part et d'autre de l'appareil de mesure 22'.

Le dispositif de calibrage 32' est également équipé d'une cale d'appui 46' solidaire de la traverse 38' sensiblement à équidistance des deux pieds 34', 36'.

La cale d'appui 46' présente une face d'appui 48' venant prendre appui contre l'appareil de mesure 22'.

Ainsi, dans le but d'améliorer la reproductibilité des épaisseurs de couche d'adhésif visqueux réactif, dans une première phase, on procède au calibrage de la position relative des deux pieds 34', 36' par rapport à la cale d'appui 46'. Pour ce faire, on applique la cale d'appui 46' directement contre la surface de réception 12', tandis qu'on porte les surfaces d'appui 40', 42' des deux pieds 34', 36' contre la surface de réception 12' en activant les actionneurs commandables 54, 56. On repère alors la position P0 des deux pieds 34', 36' par rapport à la cale d'appui 46'.

Dans une deuxième phase, comme illustrée sur la figure 8, on ajuste le seul appareil de mesure 22' entre la cale d'appui 46' et la surface de réception 12' et on enregistre une position P1 des deux pieds 34', 36' par rapport à la cale d'appui 46', correspondant à l'épaisseur de l'appareil de mesure 22'.

Dans une troisième phase, telle qu'illustrée sur la figure 9, on commande alors les actionneurs commandables 54, 56 de manière à porter les deux pieds 34', 36' dans une position P2, correspondant à l'épaisseur de l'appareil de mesure 22' repérée durant la deuxième phase, additionnée de l'épaisseur de couche d'adhésif visqueux réactif désirée 50'.

La position P1 peut être repérée pour chacun des appareils de mesure 22', ou bien pour une série dont l'épaisseur est constante.

Selon encore un autre mode de mise en œuvre de l'invention, lorsque le corps d'épreuve est convexe, ou bien concave, on prévoit alors une cale d'appui présentant la même forme complémentaire pour pouvoir appliquer une pression sur l'appareil de mesure.

## Revendications

1. Procédé de réalisation d'un capteur d'efforts du type comprenant les étapes suivantes :
a) on fournit un appareil de mesure de déformation (22) et un corps d'épreuve (10) présentant une surface de réception plane (12) ;
b) on fournit un adhésif visqueux réactif ;
c) on applique ledit adhésif visqueux réactif (14) sur ladite surface de réception (12) dudit corps d'épreuve (10);
d) on porte ledit appareil de mesure de déformation (22) sur ledit adhésif visqueux appliqué de façon à emprisonner une couche dudit adhésif visqueux réactif (50) entre ledit appareil de mesure de déformation (22) et ladite surface de réception (12) dudit corps d'épreuve (10) ; et,
e) on provoque la réaction dudit adhésif visqueux réactif de ladite couche (50) pour sceller ledit appareil de mesure de déformation (22) sur ladite surface de réception (12) dudit corps d'épreuve (10) ;
**caractérisé en ce qu'**à l'étape a), on fournit un appareil de mesure de déformation (22) comprenant au moins une jauge de déformation ;
et **en ce qu'**on fournit en outre un dispositif de calibrage (32) adapté à venir, d'une part s'appliquer sur ledit corps d'épreuve (10) de chaque côté dudit appareil de mesure de déformation (22) et, d'autre part en appui contre ledit appareil de mesure de déformation (22) pour pouvoir appliquer une pression sur ledit appareil de mesure de déformation (22) entre l'étape d) et l'étape e), jusqu'à ce que ledit appareil de mesure de déformation (22) soit porté à une distance donnée de ladite surface de réception (12), tandis que ladite couche d'adhésif visqueux réactif (50) atteint une épaisseur déterminée (e1).

2. Procédé de réalisation d'un capteur d'efforts selon la revendication 1, **caractérisé en ce qu'**à l'étape a) on fournit un appareil de mesure de déformation (22) comprenant au moins un dispositif de traitement des signaux fournis par ladite jauge de déformation.

3. Procédé de réalisation d'un capteur d'efforts la revendication 1 ou 2, **caractérisé en ce qu'**à l'étape b) on fournit un adhésif visqueux réactif apte à réagir sous l'effet de la température.

4. Procédé de réalisation d'un capteur d'efforts selon l'une quelconque des revendications 1 à 3, **caractérisé en ce qu'**à l'étape b) on fournit un adhésif visqueux réactif apte à réagir sous l'effet du rayonnement ultraviolet.

5. Procédé de réalisation d'un capteur d'efforts selon l'une quelconque des revendications 1 à 4, **caractérisé en ce qu'**à l'étape b) on fournit un adhésif visqueux réactif apte à se solidifier à l'intérieur d'un intervalle de temps inférieur à 10 minutes après que ladite réaction a été provoquée.

6. Procédé de réalisation d'un capteur d'efforts selon l'une quelconque des revendications 1 à 5, **caractérisé en ce qu'**à l'étape b) on fournit un adhésif visqueux réactif présentant une viscosité comprise entre 50 Pa.s et 250 Pa.s avant que ladite réaction ne soit provoquée.

7. Procédé de réalisation d'un capteur d'efforts selon l'une quelconque des revendications 1 à 6, **caractérisé en ce qu'**à l'étape e), on porte ledit corps d'épreuve (10) et ledit appareil de mesure de déformation (22) à l'intérieur d'une enceinte de chauffage pour provoquer la réaction dudit adhésif visqueux réactif.

8. Installation pour la réalisation d'un capteur d'efforts comprenant :
- une plateforme de réception pour recevoir un corps d'épreuve (10) présentant une surface de réception plane (12) ;
- un dispositif d'application pour appliquer un adhésif visqueux réactif sur ladite surface de réception (12) dudit corps d'épreuve ;
- un organe mécanique (20) pour porter un appareil de mesure de déformation (22) sur ladite couche d'adhésif visqueux de façon à emprisonner une couche dudit adhésif visqueux réactif entre ledit appareil de mesure de déformation (22) et ladite surface de réception (12) dudit corps d'épreuve ;
- un dispositif de traitement pour pouvoir provoquer la réaction dudit adhésif visqueux réactif de ladite couche pour sceller ledit appareil de mesure de déformation (22) sur ladite surface de réception (12) dudit corps d'épreuve ;
**caractérisé en ce qu'**elle comprend en outre un dispositif de calibrage (32) pour pouvoir appliquer une pression sur ledit appareil de mesure de déformation (22) pour le porter à une distance donnée de ladite surface de réception (12), tandis que ladite couche d'adhésif visqueux réactif atteint une épaisseur déterminée (e1) ;
et **en ce que** ledit dispositif de calibrage (32) comprend, d'une part, au moins deux pieds (34, 36) écartés l'une de l'autre aptes à venir s'appliquer sur ledit corps d'épreuve (10) de chaque côté dudit appareil de mesure de déformation (22), et d'autre part, une traverse (38) reliant lesdits deux pieds et présentant une cale d'appui (46) située entre lesdits deux pieds (34, 36) et apte à venir en appui contre ledit appareil de mesure de déformation (22).

9. Installation selon la revendication 8, **caractérisé en ce que** lesdits au moins deux pieds (34, 36) sont montés réglables par rapport à ladite traverse (38) pour pouvoir prérégler ladite distance donnée.

## Patentansprüche

1. Ein Verfahren zur Herstellung eines Kraftmessers des Typs, der die folgenden Schritte umfasst:
a) Bereitstellen einer Verformungsmesseinrichtung (22) und eines Testkörpers (10) mit einer ebenen Aufnahmefläche (12);
b) Bereitstellen eines reaktiven viskosen Klebstoffs;
c) Auftragen des genannten viskosen reaktiven Klebstoffs (14) auf die genannte Aufnahmefläche (12) des genannten Testkörpers (10);
d) Bringen der genannten Verformungsmesseinrichtung (22) über den genannten aufgetragenen viskosen Klebstoff, um eine Schicht des genannten reaktiven viskosen Klebstoffs (50) zwischen die genannte Verformungsmesseinrichtung (22) und die genannte Aufnahmefläche (12) des genannten Testkörpers (10) einzuschließen; und,
e) Bewirken einer Reaktion des genannten reaktiven viskosen Klebstoffs der genannten Schicht (50), um die genannte Verformungsmesseinrichtung (22) auf der genannten Aufnahmefläche (12) des genannten Testkörpers (10) abzudichten;
**dadurch gekennzeichnet, dass** in Schritt a) eine Verformungsmesseinrichtung (22) bereitgestellt wird, die mindestens einen Dehnungsmessstreifen umfasst;
**und dadurch, dass** ferner eine Kalibriervorrichtung (32) bereitgestellt wird, die dazu angepasst ist, einerseits am genannten Testkörper (10) auf beiden Seiten der genannten Verformungsmesseinrichtung (22) angebracht zu werden und andererseits an der genannten Verformungsmesseinrichtung (22) anzuliegen, um zwischen Schritt d) und Schritt e) Druck auf die genannte Verformungsmesseinrichtung (22) ausüben zu können, bis die genannte Verformungsmesseinrichtung (22) auf einem gegebenen Abstand von der genannten Aufnahmefläche (12) gebracht wird, während die genannte reaktive viskose Klebstoffschicht (50) eine gegebene Dicke (e1) erreicht.

2. Das Verfahren zur Herstellung eines Kraftmessers nach Anspruch 1, **dadurch gekennzeichnet, dass** in Schritt a) eine Verformungsmesseinrichtung (22) bereitgestellt wird, die mindestens eine Vorrichtung zur Verarbeitung der von dem genannten Dehnungsmessstreifen gelieferten Signale umfasst.

3. Das Verfahren zur Herstellung eines Kraftmessers nach Anspruch 1 oder 2, **dadurch gekennzeichnet, dass** in Schritt b) ein reaktiver viskoser Klebstoff bereitgestellt wird, der fähig ist, unter Temperatureinwirkung zu reagieren.

4. Das Verfahren zur Herstellung eines Kraftmessers nach irgendeinem der Ansprüche von 1 bis 3, **dadurch gekennzeichnet, dass** in Schritt b) ein reaktiver viskoser Klebstoff bereitgestellt wird, der fähig ist, unter der Wirkung ultravioletter Strahlung zu reagieren.

5. Das Verfahren zur Herstellung eines Kraftmessers nach irgendeinem der Ansprüche von 1 bis 4, **dadurch gekennzeichnet, dass** in Schritt b) ein reaktiver viskoser Klebstoff bereitgestellt wird, der fähig ist, sich innerhalb eines Zeitintervalls von weniger als 10 Minuten nach dem Auslösen der Reaktion zu verfestigen.

6. Das Verfahren zur Herstellung eines Kraftmessers nach irgendeinem der Ansprüche von 1 bis 5, **dadurch gekennzeichnet, dass** in Schritt b) ein reaktiver viskoser Klebstoff bereitgestellt wird, der eine Viskosität zwischen 50 Pa.s und 250 Pa.s aufweist, bevor die genannte Reaktion hervorgerufen wird.

7. Das Verfahren zur Herstellung eines Kraftmessers nach irgendeinem der Ansprüche von 1 bis 6, **dadurch gekennzeichnet, dass** in Schritt e) der genannte Testkörper (10) und die genannte Verformungsmesseinrichtung (22) innerhalb einer Heizkammer getragen werden, um die Reaktion des genannten reaktiven viskosen Klebstoffs zu bewirken.

8. Eine Anlage zur Herstellung eines Kraftmessers, die Folgendes umfasst:
- eine Aufnahmeplattform zur Aufnahme eines Testkörpers (10) mit einer flachen Aufnahmefläche (12);
- eine Auftragsvorrichtung zum Auftragen eines reaktiven viskosen Klebstoffs auf die genannte Aufnahmefläche (12) des genannten Testkörpers;
- ein mechanisches Organ (20) zum Tragen einer Verformungsmesseinrichtung (22) auf der genannten viskosen Klebstoffschicht, um eine Schicht des genannten reaktiven viskosen Klebstoffs zwischen der genannten Verformungsmesseinrichtung (22) und der genannten Aufnahmefläche (12) des genannten Testkörpers einzuschließen;
- eine Verarbeitungsvorrichtung, die in der Lage ist, den genannten reaktiven viskosen Klebstoff der genannten Schicht zur Reaktion zu bringen, um die genannte Verformungsmesseinrichtung (22) auf der genannten Aufnahmefläche (12) des genannten Testkörpers abzudichten;
**dadurch gekennzeichnet, dass** sie ferner eine Kalibriervorrichtung (32) umfasst, um Druck auf die genannte Verformungsmesseinrichtung (22) ausüben zu können, um sie auf einen gegebenen Abstand von der genannten Aufnahmefläche (12) zu bringen, während die genannte reaktive viskose Klebstoffschicht eine vorbestimmte Dicke (e1) erreicht;
**und dass** die genannte Kalibriervorrichtung (32) einerseits mindestens zwei voneinander beabstandete Füße (34, 36) umfasst, die geeignet sind, gegen den genannten Testkörper (10) an beiden Seiten der genannten Verformungsmesseinrichtung (22) in Anlage zu kommen, und andererseits einen Querträger (38), der die beiden genannten Füße verbindet und einen Auflagekeil (46) aufweist, der sich zwischen den genannten beiden Füßen (34, 36) befindet und geeignet ist, gegen die genannte Verformungsmesseinrichtung (22) in Anlage zu kommen.

9. Die Anlage nach Anspruch 8, **dadurch gekennzeichnet, dass** die genannten mindestens zwei Füße (34, 36) so montiert sind, dass sie relativ zum genannten Querträger (38) einstellbar sind, um den genannten gegebenen Abstand voreinstellen zu können.

## Claims

1. A method for making a force sensor of the kind comprising the following steps of:
a) providing a deformation measuring device (22) and a test body (10) having a flat receiving surface (12) ;
b) providing a reactive viscous adhesive ;
c) applying said reactive viscous adhesive (14) to said receiving surface (12) of said test body (10) ;
d) bringing said deformation measuring device (22) on said applied viscous adhesive in order to enclose a layer of said reactive viscous adhesive (50) between said deformation measuring device (22) and said receiving surface (12) of said test body (10) ; and,
e) causing the reaction of said reactive viscous adhesive of said layer (50) to seal said deformation measuring device (22) on said receiving surface (12) of said test body (10) ;
**characterized in that**, at step a), it is provided a deformation measuring device (22) comprising at least a deformation gauge ;
and **in that** it is further provided a calibrating device (32) adapted, on the one hand, to be applied to said test body (10) on each side of said deformation measuring device (22) and, on the other hand, to bear against said deformation measuring device (22) to be able to apply a pressure to said deformation measuring device (22) between step d) and step e), until said deformation measuring device (22) is carried at a given distance from said receiving surface (12), while said reactive viscous adhesive layer (50) reach a given thickness (e1).

2. The method for making a force sensor according to claim 1, **characterized in that** at step a) it is provided a deformation measuring device (22) comprising at least a processing device for the signals provided by said deformation gauge.

3. The method for making a force sensor according to claim 1 or 2, **characterized in that** at step b) it is provided a reactive viscous adhesive ready to react under the temperature effect.

4. The method for making a force sensor according to any of claims 1 to 3, **characterized in that** at step b) it is provided a reactive viscous adhesive ready to react under the ultraviolet radiation effect.

5. The method for making a force sensor according to any of claims 1 to 4, **characterized in that** at step b) it is provided a reactive viscous adhesive ready to be solidified within a time interval lower than 10 minutes after said reaction was caused.

6. The method for making a force sensor according to any of claims 1 to 5, **characterized in that** at step b) it is provided a reactive viscous adhesive having a viscosity ranging between 50 Pa.s and 250 Pa.s before said reaction is caused.

7. The method for making a force sensor according to any of claims 1 to 6, **characterized in that** at step e), said test body (10) and said deformation measuring device (22) are carried within a heating enclosure to cause the reaction of said reactive viscous adhesive.

8. An installation for making a force sensor comprising:
a receiving platform to receive a test body (10) having a flat receiving surface (12) ;
an applying device to apply a reactive viscous adhesive to said receiving surface (12) of said test body ;
a mechanical member (20) to bring a deformation measuring device (22) onto said viscous adhesive layer in order to enclose a layer of said reactive viscous adhesive between said deformation measuring device (22) and said receiving surface (12) of said test body ;
a treating device to be able to cause the reaction of said reactive viscous adhesive of said layer to seal said deformation measuring device (22) on said receiving surface (12) of said test body ;
**characterized in that** it further comprises a calibrating device (32) to be able to apply a pressure to said deformation measuring device (22) to carry it at a given distance from said receiving surface (12), while said reactive viscous adhesive layer reaches a given thickness (e1) ;
and **in that** said calibrating device (32) comprises, on the one hand, at least two feet (34, 36) spaced apart the one to the other, ready to be applied to said test body (10) on each side of said deformation measuring device (22), and, on the other hand, a cross-piece (38) connecting said two feet and having a bearing plate (46) located between said two feet (34, 36) and ready to bear against said deformation measuring device (22).

9. The installation according to claim 8, **characterized in that** said at least two feet (34, 36) are adjustably fitted relatively to said cross-piece (38) to be able to preset said given distance.
